# EUROPÄISCHE PATENTSCHRIFT

(11) **EP 3 836 024 B1**
(45) Veröffentlichungstag und Bekanntmachung des Hinweises auf die Patenterteilung: **25.01.2023**
(21) Anmeldenummer: 20213520.8
(22) Anmeldetag: 11.12.2020
(51) Int. Cl.: G06K 17/00, A24D 3/00, A24D 3/02, A24F 19/09, A24F 19/10, A24F 47/00, A24D 3/04

(54) **FILTEREINHEIT FÜR EIN RAUCHBARES TABAKERZEUGNIS UND ENTSORGUNG EINER GEBRAUCHTEN FILTEREINHEIT**
FILTER UNIT FOR A TOBACCO PRODUCT AND DISPOSAL OF A USED FILTER UNIT
UNITÉ DE FILTRATION POUR UN PRODUIT DU TABAC POUVANT ÊTRE FUMÉ ET ÉLIMINATION D'UNE UNITÉ DE FILTRATION USAGÉE

(30) Priorität: 12.12.2019 DE 102019134196
(43) Veröffentlichungstag der Anmeldung: 16.06.2021
(73) Patentinhaber: Mayr-Melnhof Karton AG, 1041 Wien (AT)
(72) Erfinder: VORENKAMP, Harman, 71549 Auenwald (DE); THEIS, Uwe, 54317 Riveris (DE)
(74) Vertreter: Hofstetter, Schurack & Partner

(56) Entgegenhaltungen:
- JP-A- 2005 332 060
- JP-A- 2008 192 121
- JP-A- 2014 123 203
- US-A1- 2018 235 274

## Beschreibung

Die vorliegende Erfindung betrifft eine Vorrichtung zur Entsorgung einer gebrauchten Filtereinheit eines rauchbaren Tabakerzeugnisses, und ein Verfahren zur Entsorgung einer gebrauchten Filtereinheit.

Zigaretten oder sonstige rauchbare Tabakerzeugnisse können mit Filtern ausgestattet sein, um schädliche Inhaltsstoffe von Tabakrauch aus diesem herauszufiltern. Nach dem Konsum des rauchbaren Tabakerzeugnisses ist der Filter nicht mehr zu gebrauchen und muss entsorgt werden.

Um eine Verschmutzung der Umwelt, beispielsweise von Straßen, Wegen oder Plätzen, durch weggeworfene gebrauchte Filter zu reduzieren, kann es sinnvoll sein, ein Pfandsystem für Filter einzuführen und/oder beispielsweise steuerliche Abgaben auf die Filter zu erheben, wobei die Abgaben beispielsweise vollständig oder teilweise zurückgezahlt werden können, wenn eine ordnungsgemäße Entsorgung des Filters nachgewiesen wird.

Im Dokument DE 692 12219 T3 wird die Kodierung von Magnetfäden zur Authentifizierung von Sicherheitspapier beschrieben.

Dokument WO 90/08367 A1 beschreibt einen binär codierten magnetischen Faden als Sicherheitsfaden für Banknoten.

Dokument JP 2008 192121 A beschreibt einen Aschenbecher, in den ein Zigarettenstummel eingeworfen werden kann. Der Zigarettenstummel enthält ein IC-Tag, das eine ID speichert. Ein Schreib-Lesegerät des Aschenbechers liest die ID und ein Kommunikationsteil übermittelt diese an einen Server. Die ID wird mit einer gespeicherten ID abgeglichen.

Vor diesem Hintergrund ist es eine Aufgabe der vorliegenden Erfindung, ein verbessertes Konzept für die Entsorgung einer Filtereinheit für ein rauchbares Tabakerzeugnis anzugeben, das eine Dokumentation der Entsorgung gebrauchter Filtereinheiten ermöglicht.

Erfindungsgemäß wird diese Aufgabe gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, die Filtereinheit mit einem Datenträger auszustatten, der einen Identifikator für die individuelle Filtereinheit speichern kann.

Gemäß dem verbesserten Konzept wird eine Vorrichtung zur Entsorgung einer gebrauchten Filtereinheit eines rauchbaren Tabakerzeugnisses angegeben. Die Vorrichtung weist einen Bereich zur Aufnahme der Filtereinheit auf, sowie ein Lesegerät, das dazu eingerichtet ist, einen Identifikator der Filtereinheit automatisch von einem Datenträger der Filtereinheit auszulesen, wenn sich die Filtereinheit in dem Bereich befindet. Die Vorrichtung weist eine Kommunikationseinheit auf, die dazu eingerichtet ist, den ausgelesenen Identifikator mit einem Referenzcode zu vergleichen, insbesondere mit einer Vielzahl, also drei oder mehr, verschiedenen Referenzcodes, der auf einer Datenbank gespeichert ist beziehungsweise die auf der Datenbank gespeichert sind. Die Kommunikationseinheit ist dazu eingerichtet, abhängig von einem Ergebnis des Vergleichs wenigstens ein elektrisches Signal zu erzeugen.

Der Identifikator kann dabei insbesondere ein magnetisch codierter Identifikator sein oder ein auf einem Speicher eines RFID-Transponders, beispielsweise eines NFC-Transponders, gespeicherter Identifikator. Hierbei stehen die Akronyme RFID und NFC für die englischen Begriffe "Radio-Frequency-Identification" beziehungsweise "Near-Field-Communication".

Unter einem rauchbaren Tabakerzeugnis kann insbesondere eine Zigarette, eine Zigarre oder ein Zigarillo verstanden werden.

Die Entsorgung der Filtereinheit erfolgt dabei in Abhängigkeit von dem wenigstens einen elektrischen Signal, wobei die Entsorgung oder eine Zerstörung durch das wenigstens eine elektrische Signal eingeleitet oder ausgelöst werden.

Der Bereich zur Aufnahme der Filtereinheit ist insbesondere derart ausgestaltet, dass ein Benutzer der Vorrichtung die Filtereinheit, beispielsweise durch eine Öffnung in einem Gehäuse der Vorrichtung, in den Bereich einlegen, einwerfen oder anderweitig einbringen kann.

Die Kommunikationseinheit kann beispielsweise eine Recheneinheit zum Vergleichen des Identifikators mit dem Referenzcode aufweisen und eine Kommunikationsschnittstelle zur Kommunikation der Kommunikationseinheit mit der Datenbank, insbesondere zum Abrufen des Referenzcodes.

Die Datenbank kann beispielsweise auf einem Speichermedium der Vorrichtung gespeichert sein oder auf einem extern zu der Vorrichtung angeordneten Speichermedium, beispielsweise auf einem Speichermedium einer Cloud oder eines Serversystems.

Die Kommunikationseinheit kann, insbesondere über die Kommunikationsschnittstelle, drahtlos oder drahtgebunden mit der Datenbank beziehungsweise mit dem Speicherelement kommunizieren.

Das Ergebnis des Vergleichs kann beispielsweise die Information beinhalten, dass der Referenzcode mit dem Identifikator übereinstimmt oder dem Identifikator entspricht. Das Ergebnis des Vergleichs kann auch die Information beinhalten, dass der Referenzcode als gültig markiert ist und mit dem Identifikator übereinstimmt oder dem Identifikator entspricht.

In der Datenbank ist insbesondere eine Vielzahl von Referenzcodes gespeichert. Die Kommunikationseinheit ist insbesondere dazu eingerichtet, den Identifikator nacheinander oder parallel mit allen Referenzcodes zu vergleichen, bis ein Referenzcode identifiziert wurde, der dem Identifikator entspricht oder bis der Identifikator mit allen Referenzcodes verglichen wurde.

Entsprechend kann ein Ergebnis des Vergleichs auch die Information beinhalten, dass keiner der Referenzcodes aus der Datenbank mit dem Identifikator übereinstimmt oder diesem entspricht oder, dass der Referenzcode mit dem Identifikator übereinstimmt oder diesem entspricht, jedoch als ungültig, entwertet oder dergleichen markiert ist.

Das Lesegerät kann beispielsweise einen Magnetkopf aufweisen, um den Datenträger auszulesen, um den magnetisch codierten Identifikator auszulesen. Im Falle eines auf einem RFID-Transponder gespeicherten Identifikators kann das Lesegerät als RFID-Lesegerät ausgestaltet sein.

Durch die Vorrichtung wird eine automatische und kontaktlose Identifikation oder Verifikation der individuellen Filtereinheit ermöglicht. Insbesondere handelt es sich bei dem Identifikator um einen der Filtereinheit eindeutig und individuell zugeordneten Identifikator.

Dadurch kann sicher dokumentiert werden, dass die entsprechende Filtereinheit von der Vorrichtung verarbeitet beziehungsweise erkannt wurde. Diese sichere Dokumentation kann beispielsweise im Kontext eines Pfandsystems für Filtereinheiten oder einer Steuerrückzahlung und so weiter eingesetzt werden.

Beispielsweise kann der Benutzer abhängig von dem Ergebnis des Vergleichs, also insbesondere wenn der Referenzcode mit dem Identifikator übereinstimmt und als gültig markiert ist, einen eingesetzten Pfand zurück erhalten. Eine andere Anwendungsmöglichkeit ist es, dass der Hersteller des rauchbaren Tabakerzeugnisses eine Steuerabgabe, die er für die Filtereinheit entrichtet hat, teilweise oder vollständig zurück erhält, wenn er dokumentieren kann, dass die entsprechende Filtereinheit von der Vorrichtung verarbeitet wurde, beispielsweise zerstört wurde.

Durch die Verwendung des magnetisch codierten Identifikators oder eines auf einem RFID-Transponder gespeicherten Identifikators der Filtereinheit wird eine dauerhafte und sichere Kennzeichnung der Filtereinheit ermöglicht. Zudem kann der Identifikator von dem Lesegerät ausgelesen werden, ohne dass ein physischer Kontakt zwischen dem Lesegerät, insbesondere dem Magnetkopf oder dem RFID-Lesegerät, und der Filtereinheit erforderlich ist, was insbesondere Verunreinigungen vorbeugen kann.

Durch die magnetische Codierung oder die Verwendung des RFID-Transponders ist es außerdem nicht erforderlich, dass der Datenträger oder der Identifikator von außen erkennbar ist oder ein Sichtkontakt zwischen dem Lesegerät und dem Datenträger beziehungsweise dem Identifikator.

Außerdem ist durch die magnetische Codierung oder die Verwendung des RFID-Transponders der Identifikator besonders schnell auslesbar und der Datenträger kann unterschiedlichste Ausprägungen oder Formen aufweisen.

Der magnetisch codierte Identifikator oder die Verwendung des RFID-Transponders in Kombination mit dem Vergleich mit dem auf der Datenbank gespeicherten Referenzcode macht das Konzept auch missbrauchssicher.

Die Vorrichtung weist eine Filterverarbeitungseinheit auf, die dazu eingerichtet ist, die Filtereinheit abhängig von dem Ergebnis des Vergleichs, insbesondere abhängig von dem wenigstens einen elektrischen Signal, zu zerstören, insbesondere physisch oder mechanisch zu zerstören und/oder zu zerkleinern.

Gemäß zumindest einer Ausführungsform der Vorrichtung nach dem verbesserten Konzept ist die Kommunikationseinheit dazu eingerichtet, den Referenzcode abhängig von dem wenigstens einen elektrischen Signal zu modifizieren, wenn, insbesondere anhand des Vergleichs, festgestellt wird, dass der Referenzcode dem ausgelesenen Identifikator entspricht oder mit diesem übereinstimmt.

Das Modifizieren des Referenzcodes kann beispielsweise ein Löschen oder als ungültig beziehungsweise entwertet Markieren des Referenzcodes auf der Datenbank beinhalten beziehungsweise das Erzeugen eines entsprechenden Signals, um dies zu veranlassen.

Durch die Modifikation, insbesondere das Löschen oder als ungültig beziehungsweise entwertet Markieren des Referenzcodes, wird das Konzept missbrauchssicherer, da eine doppelte Entwertung beziehungsweise Geltendmachung desselben Identifikators oder Referenzcodes verhindert wird. Außerdem wird dadurch ein Zugriff mehrerer Vorrichtungen nach dem verbesserten Konzept auf eine zentrale Datenbank mit den Referenzcodes möglich.

Insbesondere erfolgt die Modifikation des Referenzcodes gekoppelt an die Zerstörung der Filtereinheit. Mit anderen Worten wird die Modifikation des Referenzcodes nur dann vorgenommen, der Referenzcode also insbesondere nur dann gelöscht oder als ungültig oder entwertet markiert, wenn die Zerstörung erfolgt oder eingeleitet ist.

Gemäß dem verbesserten Konzept wird auch ein Verfahren zur Entsorgung einer gebrauchten Filtereinheit eines rauchbaren Tabakerzeugnisses angegeben. Die Filtereinheit weist einen Datenträger auf, wobei auf dem Datenträger ein, insbesondere maschinenlesbarer, Identifikator der Filtereinheit gespeichert ist.

Der Datenträger kann magnetisch beschreibbar sein. Der Identifikator kann dann insbesondere magnetisch codiert sein.

Der Datenträger kann auch einen RFID-Transponder enthalten, der einen Speicher aufweist, welcher den Identifikator speichert.

Die Filtereinheit kann beispielsweise einen Filter, also ein Filtermaterial, und ein Mundstück beinhalten. Das Mundstück kann beispielsweise eine Lage aus Papier oder einem anderen Material beinhalten, das um den Filter herum angeordnet ist.

Der Identifikator der Filtereinheit kennzeichnet insbesondere die Filtereinheit individuell und eindeutig. Insbesondere weist in einer vorgegebenen Gesamtmenge von Filtereinheiten nach dem verbesserten Konzept jede Filtereinheit einen anderen Identifikator auf. Dabei beschränkt sich die Kennzeichnung der Filtereinheit durch den Identifikator insbesondere nicht darauf, eine Art, eine Charge oder sonstige allgemeine Spezifikation mehrerer Filtereinheiten zu speichern.

Dass der Identifikator auf dem Datenträger gespeichert ist, kann insbesondere derart verstanden werden, dass er mit dem Identifikator beschrieben, insbesondere magnetisch beschrieben oder magnetisch codiert, ist.

Gemäß zumindest einer Ausführungsform ist der Identifikator kontaktlos, insbesondere ohne die Filtereinheit zu zerstören, zu öffnen oder vorzubehandeln, maschinell und automatisch lesbar.

Gemäß zumindest einer Ausführungsform enthält der Datenträger einen magnetisch beschreibbaren Faden.

Der magnetisch beschreibbare Faden kann beispielsweise ein ferromagnetisches Material, beispielsweise ein Metalloxid, beinhalten. Das ferromagnetische Material kann beispielsweise auf ein Trägermaterial, beispielsweise ein Kunststoff oder einem Metall, aufgebracht sein.

Die Codierung des Fadens kann beispielsweise durch abschnittsweise unterschiedliche Magnetisierung des ferromagnetischen Materials erfolgen.

Insbesondere kann dadurch eine binäre Codierung erfolgen, indem zwei verschiedene Magnetisierungszustände eingesetzt werden.

Dadurch lässt sich mit Vorteil auf sehr geringem Platz eine für die beschriebenen Zwecke ausreichende Informationsmenge speichern.

Gemäß zumindest einer Ausführungsform ist der magnetische Faden dazu eingerichtet, wenigstens 5 bit, bevorzugt wenigstens 8 bit, insbesondere wenigstens 10 bit, an Daten zu speichern.

Damit kann sichergestellt werden, dass eine ausreichend große Anzahl verschiedener Filtereinheiten mit unterschiedlichen Identifikatoren versehen werden kann.

Die Verwendung eines magnetisch beschreibbaren Fadens hat insbesondere den Vorteil, dass sich dieser besonders einfach in das Filtermaterial des Filters, welches beispielsweise ebenfalls aus Fäden oder Fasern besteht, insbesondere aus Celluloseacetatfasern, einarbeiten lassen. Auch in Papier, wie es beispielsweise zur Ausbildung des Mundstücks eingesetzt werden kann, lassen sich solche Fäden einfach einarbeiten.

Dadurch ist eine aufwendige Anpassung oder Modifikation existierender Maschinen zur Zigaretten- oder Zigarrenherstellung nicht erforderlich.

Gemäß zumindest einer Ausführungsform enthält die Filtereinheit das Filtermaterial und der beschreibbare Faden ist in das Filtermaterial eingebettet.

Das Filtermaterial enthält insbesondere eine Vielzahl von Fasern, beispielsweise Celluloseacetatfasern.

Dass der Faden in das Filtermaterial eingebettet ist, kann beispielsweise derart verstanden werden, dass der Faden von den Fasern des Filtermaterials vollständig oder teilweise umgeben ist. Beispielsweise kann der Faden als Faser in das Filtermaterial eingearbeitet sein.

Durch das Einbetten des Fadens in das Filtermaterial ist der Datenträger insbesondere von außen nicht sichtbar, sodass ein optisches Erscheinungsbild des rauchbaren Tabakerzeugnisses, insbesondere der Filtereinheit, nicht beeinträchtigt wird. Zudem werden mechanische Eigenschaften sowie chemische oder physikalische Eigenschaften betreffend das Filtern des Tabakrauchs durch das Zusetzen des Fadens nicht beeinflusst.

Gemäß zumindest einer Ausführungsform weist die Filtereinheit das Mundstück auf, welches das Filtermaterial umgibt, wobei das Mundstück den beschreibbaren Faden enthält.

Beispielsweise kann das Mundstück eine Hülse aus Filterpapier enthalten und das Filtermaterial ist in die Hülse eingebracht.

Der Faden kann dabei beispielsweise in das Filterpapier des Mundstücks eingebettet sein oder auf einer Innen- oder Außenseite des Mundstücks angeordnet sein, beispielsweise mit diesem verklebt sein.

Gemäß verschiedener Ausführungsformen weist das Mundstück eine Außenlage und eine Innenlage auf. Die Innenlage ist dabei dem Filter zugewandt und die Außenlage auf einer dem Filter abgewandten Seite der Innenlage angeordnet.

Die Außenlage kann dabei beispielsweise die optische Erscheinung der Filtereinheit definieren, wobei die Innenlage beispielsweise zur mechanischen Verstärkung des Mundstücks und der Filtereinheit dienen kann.

Der Faden kann sowohl in oder an der Außenlage als auch in oder an der Innenlage angeordnet sein.

Gemäß zumindest einer Ausführungsform beinhaltet der Datenträger einen RFID-Transponder, beispielsweise einen NFC-Transponder.

Gemäß zumindest einer Ausführungsform enthält die Filtereinheit, insbesondere enthält der Filter oder das Filtermaterial, eine Kapsel, welche den Datenträger aufweist oder gleich dem Datenträger ist.

Unter einer Kapsel kann hierbei ein Behälter verstanden werden, der klein genug ist, um vollständig innerhalb der Filtereinheit, insbesondere innerhalb des Filtermaterials, angeordnet zu sein.

Die Kapsel kann beispielsweise ein Additiv, beispielsweise einen Aromastoff oder dergleichen, beinhalten. Beispielsweise kann die Kapsel durch einen Benutzer des Tabakerzeugnisses zusammengedrückt werden, um das Additiv freizusetzen, beziehungsweise das Additiv dem Tabakrauch zuzusetzen.

Die Kapsel kann beispielsweise innen oder außen mit einem magnetisch codierbaren Element, beispielsweise einem magnetisch codierbaren Aufdruck oder Aufkleber, versehen sein, das den Identifikator speichert.

Die Kapsel kann mit Vorteil bereits vor der Herstellung des Tabakerzeugnisses oder der Filtereinheit mit dem Identifikator versehen werden, sodass eine Anpassung des Herstellungsverfahrens zum Herstellen des Tabakerzeugnisses oder der Filtereinheit nicht oder nur sehr eingeschränkt erforderlich ist.

Gemäß zumindest einer Ausführungsform enthält die Kapsel ein magnetisierbares Farbmittel, also ein magnetisierbares Pigment oder einen magnetisierbaren Farbstoff, das den Identifikator enthält.

Gemäß zumindest einer Ausführungsform enthält der Datenträger ein magnetisierbares Farbmittel, das an dem Mundstück angebracht ist, beispielsweise auf einer Oberfläche des Mundstücks.

Das magnetisierbare Farbmittel, welches beispielsweise als Pigment oder Farbstoff ausgestaltet sein kann, ist insbesondere magnetisch codiert, um den Identifikator zu speichern.

Das Farbmittel kann beispielsweise auf das Mundstück gedruckt oder per Transferübertragung auf dem Mundstück angebracht sein.

Der Datenträger weist insbesondere eine Schicht oder Beschichtung mit dem magnetisierbaren Farbmittel auf.

Als Farbmittel kann jede farbgebende Substanz dienen, insbesondere ein Pigment oder Farbstoff, der durch ein entsprechendes Magnetfeld codiert werden kann, also beispielsweise ein ferromagnetisches Material enthält.

Die Schicht beziehungsweise das Farbmittel kann dabei auf einer Außenseite oder einer dem Filtermaterial zugewandten Innenseite des Mundstücks angebracht sein.

Gemäß dem Verfahren zur Entsorgung der gebrauchten Filtereinheit nach dem verbesserten Konzept wird der Identifikator der Filtereinheit maschinell, insbesondere automatisch, ausgelesen, insbesondere mittels eines Lesegeräts. Der ausgelesene Identifikator wird mittels einer Kommunikationseinheit mit einem Referenzcode verglichen, der auf einer Datenbank gespeichert ist. Abhängig von einem Ergebnis des Vergleichs wird, insbesondere mittels einer Kommunikationseinheit, wenigstens ein elektrisches Signal erzeugt.

Gemäß zumindest einer Ausführungsform des Verfahrens zur Entsorgung der gebrauchten Filtereinheit wird die Filtereinheit vor dem Auslesen des Identifikators von einer Vorrichtung aufgenommen, die die Kommunikationseinheit und insbesondere das Lesegerät aufweist.

Weitere Ausführungsformen des Verfahrens zur Entsorgung einer gebrauchten Filtereinheit nach dem verbesserten Konzept ergeben sich unmittelbar aus den verschiedenen Ausgestaltungsformen der Vorrichtung zum Entsorgen einer gebrauchten Filtereinheit nach dem verbesserten Konzept und umgekehrt. Insbesondere kann die Vorrichtung zur Entsorgung einer gebrauchten Filtereinheit dazu eingerichtet oder programmiert sein, ein Verfahren zur Entsorgung nach dem verbesserten Konzept durchzuführen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

In den Figuren zeigen:
- Fig. 1: eine schematische Darstellung einer Zigarette mit einer beispielhaften Ausführungsform einer Filtereinheit;
- Fig. 2: eine schematische Darstellung einer Zigarette mit einer weiteren beispielhaften Ausführungsform einer Filtereinheit;
- Fig. 3: eine schematische Darstellung einer Zigarette mit einer weiteren beispielhaften Ausführungsform einer Filtereinheit;
- Fig. 4: eine schematische Darstellung einer Zigarette mit einer weiteren beispielhaften Ausführungsform einer Filtereinheit;
- Fig. 5: eine schematische Darstellung einer Zigarette mit einer weiteren beispielhaften Ausführungsform einer Filtereinheit;
- Fig. 6: eine schematische Darstellung einer beispielhaften Ausführungsform einer Vorrichtung zum Entsorgen einer gebrauchten Filtereinheit nach dem verbesserten Konzept; und
- Fig. 7: ein Ablaufdiagramm einer beispielhaften Ausführungsform eines Verfahrens zum Herstellen eines rauchbaren Tabakerzeugnisses sowie einer beispielhaften Ausführungsform eines Verfahrens zur Entsorgung einer gebrauchten Filtereinheit nach dem verbesserten Konzept.

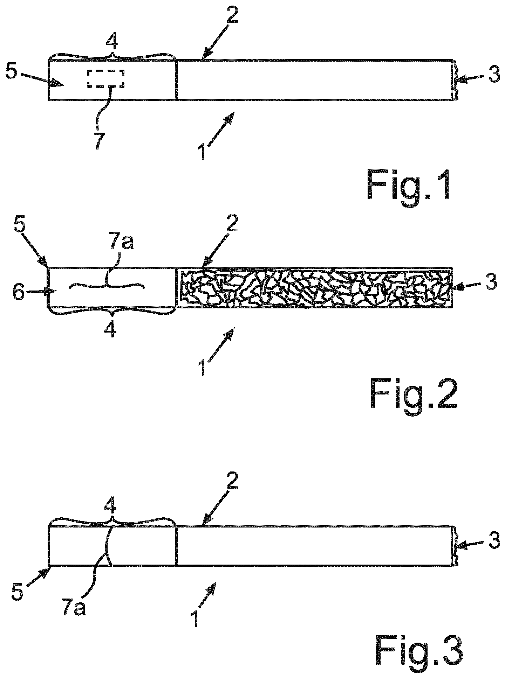

In Fig. 1 ist eine Zigarette 1 mit einer Filtereinheit 4 dargestellt. Die Filtereinheit 4 kann beispielsweise durch ein Verfahren zur Entsorgung einer gebrauchten Filtereinheit nach dem verbesserten Konzept entsorgt werden.

Die Zigarette 1 weist eine Tabakfüllung 3 auf, die von Zigarettenpapier 2 umgeben ist. An einem Ende der Tabakfüllung 3 ist die Filtereinheit 4 angeordnet, die beispielsweise mit der Tabakfüllung 3 und/oder dem Zigarettenpapier 2 verklebt ist.

Die Filtereinheit 4 weist beispielsweise ein Mundstück 5 auf, welches einen Filter 6 umgibt, der beispielsweise aus Celluloseacetatfasern hergestellt ist. Außerdem weist die Filtereinheit 4 beispielsweise einen magnetisch beschreibbaren und magnetisch beschriebenen Datenträger 7 auf, wobei auf dem Datenträger 7 ein Identifikator der Filtereinheit 4 gespeichert ist, der die Filtereinheit 4 insbesondere eindeutig identifiziert. In alternativen Ausführungsformen weist der Datenträger 7 einen RFID-Transponder, beispielsweise einen NFC-Transponder, auf, der einen Speicher enthält, auf dem der Identifikator gespeichert ist.

Das Mundstück 5 kann beispielsweise eine Außenlage, beispielsweise ein Filterpapier, aufweisen, die beispielsweise das optische Erscheinungsbild der Filtereinheit 4 festlegt.

Optional kann das Mundstück 5 eine Innenlage zwischen dem Filter 6 und der Außenlage aufweisen, die beispielsweise zur mechanischen Verstärkung des Mundstücks 5 dient.

In Fig. 2 ist eine Längsschnittdarstellung einer Zigarette mit einer weiteren beispielhaften Ausführungsform einer Filtereinheit 4 dargestellt.

Im Beispiel der Fig. 2 enthält der Datenträger 7 einen magnetisch beschreibbaren Faden 7a, der in das Filtermaterial des Filters 6 eingebettet ist.

In Fig. 3 ist eine schematische Darstellung einer Zigarette mit einer weiteren beispielhaften Ausführungsform einer Filtereinheit 4 dargestellt.

Im Beispiel der Fig. 3 enthält der Datenträger 7 ebenfalls einen magnetisch codierten und beschreibbaren Faden 7a, der beispielsweise in das Filterpapier des Mundstücks 5 eingearbeitet ist. Alternativ kann der Faden 7a in die Innenlage des Mundstücks 5 eingearbeitet sein.

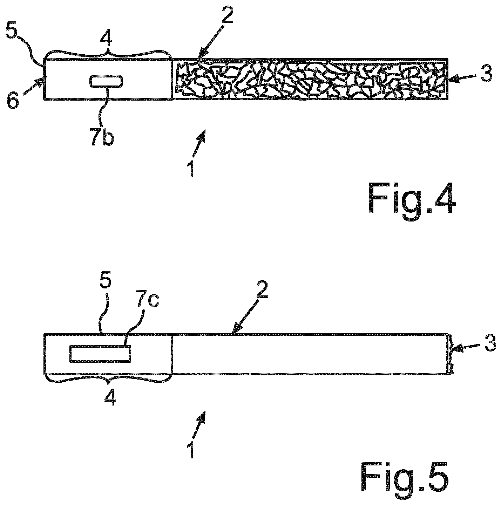

In Fig. 4 ist eine Längsschnittdarstellung einer Zigarette 1 mit einer weiteren beispielhaften Ausführungsform einer Filtereinheit 4 gezeigt.

Im Beispiel der Fig. 4 weist der Datenträger 7 eine Kapsel 7b auf, die im Inneren des Filters 6 angeordnet ist.

Die Kapsel 7b kann beispielsweise ein Additiv enthalten, das bei äußerer Einwirkung auf die Kapsel durch einen Benutzer aus dieser austreten kann, beispielsweise um dem Tabakrauch ein Aroma zuzusetzen.

Die Kapsel 7b kann einen magnetisch codierten Aufdruck, eine magnetisch codierte Beschriftung oder einen magnetisch codierten Faden aufweisen und demnach vorteilhaft gleichzeitig als Datenträger dienen, der den Identifikator der Filtereinheit 4 speichert.

In Fig. 5 ist eine schematische Darstellung einer Zigarette mit einer weiteren beispielhaften Ausführungsform einer Filtereinheit 4 dargestellt.

Im Beispiel der Fig. 5 enthält der Datenträger 7 beispielsweise eine Beschichtung des Filterpapiers des Mundstücks 5, beispielsweise auf einer dem Filter 6 zugewandten Innenseite der Außenlage oder auf einer dem Filter 6 abgewandten Außenseite der Außenlage.

Der Datenträger 7 beinhaltet in diesem Beispiel die Beschichtung 7c, die magnetisch codiert ist. Dazu kann die Beschichtung 7c beispielsweise ein magnetisierbares Pigment oder einen magnetisierbaren Farbstoff beinhalten.

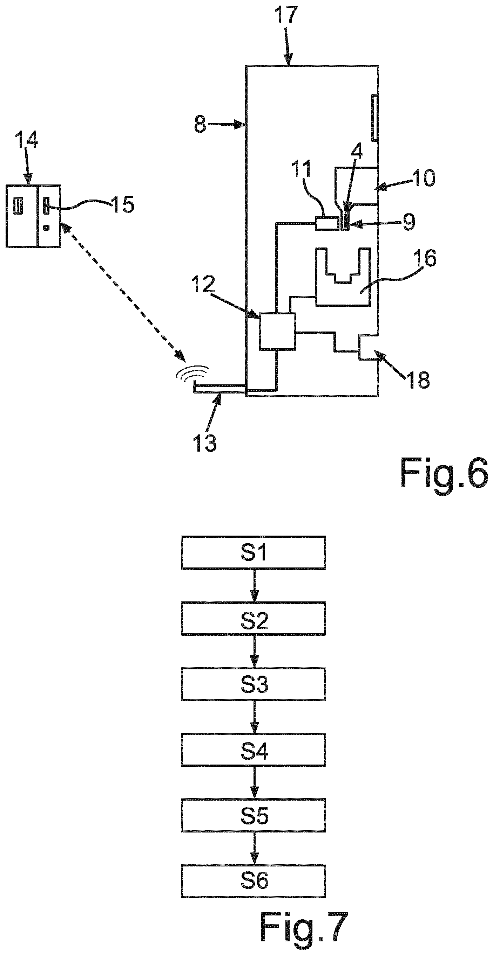

In Fig. 6 ist eine schematische Darstellung einer Vorrichtung 8 nach dem verbesserten Konzept zur Entsorgung einer gebrauchten Filtereinheit 4 für ein rauchbares Tabakerzeugnis, insbesondere einer Filtereinheit 4 nach einer der Fig. 1 bis Fig. 5, dargestellt.

Die Vorrichtung 8 weist ein Gehäuse 17 auf, das beispielsweise an einer Vorderseite eine Öffnung 10 hat, um einem Benutzer der Vorrichtung 8 das Einwerfen oder Einlegen der Filtereinheit 4 ins Innere der Vorrichtung 8 zu ermöglichen. Über die Öffnung 10 kann die Filtereinheit 4 insbesondere in einen Bereich 9 der Vorrichtung 8 gebracht werden, der in unmittelbarer Nähe zu einem Lesegerät 11 der Vorrichtung angeordnet ist. Das Lesegerät 11 kann je nach Ausgestaltung des Datenträgers 7 ein magnetisches Lesegerät oder ein RFID-Lesegerät sein.

Des Weiteren weist die Vorrichtung 8 eine Recheneinheit 12 auf, die mit dem Lesegerät 11 gekoppelt ist, sowie eine Filterverarbeitungseinheit 16, die ebenfalls mit der Recheneinheit 12 gekoppelt ist. Außerdem weist die Vorrichtung 8 eine Kommunikationsschnittstelle 13 auf, die zur drahtgebundenen oder drahtlosen Kommunikation eingerichtet ist.

Befindet sich die Filtereinheit 4 in dem Bereich 9, so versucht das Lesegerät 11, den Identifikator der Filtereinheit 4 auszulesen. Insbesondere, wenn die Filtereinheit 4 nach dem verbesserten Konzept ausgestaltet ist, kann das Lesegerät den Identifikator auslesen, wenn sich die Filtereinheit 4 in dem Bereich 9 befindet.

Das Lesegerät 11 übermittelt den ausgelesenen Identifikator an die Recheneinheit 12. Mittels der Kommunikationsschnittstelle 13 erhält die Recheneinheit 12 Zugriff auf eine Vielzahl von Referenzcodes, die in einer Datenbank 15 gespeichert sind.

Im gezeigten Beispiel der Fig. 6 ist die Datenbank 15 beispielsweise auf einem Speicherelement eines externen Servercomputers 14 gespeichert. Die Kommunikationsschnittstelle 13 ist dann zur drahtlosen Kommunikation zwischen dem Servercomputer 14 eingerichtet.

In alternativen Ausführungsformen kann die Datenbank 15 auch auf einem Speicherelement der Vorrichtung 8 gespeichert sein.

Die Recheneinheit 12 kann den ausgelesenen Identifikator mit den Referenzcodes der Datenbank 15 vergleichen und so feststellen, ob der Identifikator der konkreten Filtereinheit 4 in der Datenbank 15 gespeichert ist und ob er als gültig oder ungültig markiert ist.

Wird so mittels der Recheneinheit 12 festgestellt, dass der Identifikator der Filtereinheit 4 mit einem der Referenzcodes übereinstimmt, der als gültig markiert ist, so veranlasst die Recheneinheit 12 mittels der Kommunikationsschnittstelle 13, dass der entsprechende Referenzcode auf der Datenbank 15 gelöscht oder als ungültig markiert wird.

Die Filtereinheit 4 wird von dem Bereich 9 in die Filterverarbeitungseinheit 16 transferiert. Die Filterverarbeitungseinheit 16 ist dazu eingerichtet, die Filtereinheit 4 angesteuert durch die Recheneinheit 12 physisch zu zerstören. Dabei ist die Zerstörung der Filtereinheit 4 insbesondere an das Löschen oder als ungültig Markieren des entsprechenden Referenzcodes auf der Datenbank 15 gekoppelt.

Optional kann die Vorrichtung 8 eine Ausgabeeinheit 18 aufweisen, mittels der, insbesondere angesteuert durch die Recheneinheit 12, ein Pfand, eine Pfandmarke, ein Beleg oder dergleichen an den Benutzer ausgegeben werden kann.

In Fig. 7 ist ein Ablaufdiagramm einer beispielhaften Ausführungsform eines Verfahrens zum Herstellen eines rauchbaren Tabakerzeugnisses sowie zur Entsorgung einer gebrauchten Filtereinheit nach dem verbesserten Konzept gezeigt.

In Schritt S1 des Verfahrens wird das Tabakerzeugnis, beispielsweise eine Zigarette 1, wie sie in den Fig. 1 bis Fig. 5 gezeigt ist, hergestellt. Dabei wird insbesondere die Filtereinheit 4 hergestellt, wobei der Datenträger 7 in die Filtereinheit 4 integriert wird. Zudem wird der Datenträger 7 mit dem Identifikator beschrieben.

Dabei auf vorab gefertigte Filtereinheiten 4 zurückgegriffen werden, um diese beispielsweise mit der Tabakfüllung 3 und dem Zigarettenpapier 2 verbinden. In diesem Fall kann der Datenträger 7 beispielsweise bereits vorab in die Filtereinheit 4 integriert worden sein.

Die Fertigung von Tabakerzeugnis und Filtereinheit 4 kann jedoch auch kombiniert, gewissermaßen inline, durchgeführt werden. Dabei kann insbesondere der Filter 6 aus Celluloseacetatfasern hergestellt werden. Insbesondere kann dazu ein Band aus Celluloseacetat verarbeitet werden, das von einer Rolle abgespult wird.

Insbesondere in Ausführungsformen, in denen der Datenträger 7 als magnetisch beschreibbarer Faden 7a ausgestaltet ist, kann dieser dann beispielsweise von einer separaten Rolle abgespult werden und als Faser in das Filtermaterial eingearbeitet werden.

In Schritt S2 wird der Datenträger 7 beispielsweise mit dem Identifikator beschrieben.

In Schritt S3 wird ein dem Identifikator entsprechender Referenzcode auf der Datenbank 15 gespeichert.

In Schritt S4 des Verfahrens wird die Filtereinheit 4 von einem Benutzer einer Vorrichtung 8 nach dem verbesserten Konzept zugeführt, wie bezüglich Fig. 6 beschrieben.

In Schritt S5 vergleicht die Recheneinheit 12 der Vorrichtung den ausgelesenen Identifikator mit den Referenzcodes, wie oben beschrieben.

In Schritt S6 erfolgt das Löschen beziehungsweise als ungültig Markieren des Referenzcodes auf der Datenbank 15 beziehungsweise das Zerstören der Filtereinheit 4 durch die Filterverarbeitungseinheit 16, wie oben beschrieben-

Die zerstörten Filtereinheiten 4 können beispielsweise einer Kompostierung oder einer sonstigen Entsorgung zugeführt werden.

Durch das verbesserte Konzept wird es ermöglicht, Filtereinheiten für rauchbare Tabakerzeugnisse individuell nachzuverfolgen und insbesondere deren Entsorgung mittels einer Vorrichtung nach dem verbesserten Konzept zu überwachen. Dadurch lassen sich Pfandsysteme oder dergleichen wie eingangs beschrieben realisieren.

### BEZUGSZEICHENLISTE:

- 1: Zigarette
- 2: Zigarettenpapier
- 3: Tabakfüllung
- 4: Filtereinheit
- 5: Mundstück
- 6: Filter
- 7: Datenträger
- 7a: Faden
- 7b: Kapsel
- 7c: Beschichtung
- 8: Vorrichtung
- 9: Bereich
- 10: Öffnung
- 11: Lesegerät
- 12: Recheneinheit
- 13: Kommunikationsschnittstelle
- 14: Servercomputer
- 15: Datenbank
- 16: Filterverarbeitungseinheit
- 17: Gehäuse
- 18: Ausgabeeinheit
- S1 bis S6: Verfahrensschritte

## Patentansprüche

1. Vorrichtung zur Entsorgung einer gebrauchten Filtereinheit (4) eines rauchbaren Tabakerzeugnisses (1), die Vorrichtung (8) aufweisend
- einen Bereich (9) zur Aufnahme der Filtereinheit (4);
- ein Lesegerät (11), das dazu eingerichtet ist, einen Identifikator der Filtereinheit (4) automatisch von einem Datenträger (7) der Filtereinheit (4) auszulesen, wenn sich die Filtereinheit (4) in dem Bereich (9) befindet;
- eine Kommunikationseinheit (12, 13), die dazu eingerichtet ist,
- den ausgelesenen Identifikator mit einem Referenzcode zu vergleichen, der auf einer Datenbank (15) gespeichert ist;
- abhängig von einem Ergebnis des Vergleichs wenigstens ein elektrisches Signal zu erzeugen; **gekennzeichnet durch**
- eine Filterverarbeitungseinheit (16), die dazu eingerichtet ist, die Filtereinheit (4) abhängig von dem Ergebnis des Vergleichs zu zerstören.

2. Vorrichtung nach Anspruch 1, wobei die Kommunikationseinheit (12, 13) dazu eingerichtet ist den Referenzcode abhängig von dem wenigstens einen elektrischen Signal zu modifizieren, wenn der Referenzcode dem ausgelesenen Identifikator entspricht.

3. Verfahren zur Entsorgung einer gebrauchten Filtereinheit (4) eines rauchbaren Tabakerzeugnisses (1), wobei
- die Filtereinheit (4) einen Datenträger (7) aufweist, wobei auf dem Datenträger (7) ein Identifikator der Filtereinheit (4) gespeichert ist;
- der Identifikator der Filtereinheit (4) maschinell ausgelesen wird;
- der ausgelesene Identifikator mittels einer Kommunikationseinheit (12, 13) mit einem Referenzcode verglichen wird, der auf einer Datenbank (15) gespeichert ist;
- abhängig von einem Ergebnis des Vergleichs wenigstens ein elektrisches Signal erzeugt wird; und
- die Filtereinheit (4) abhängig von dem Ergebnis des Vergleichs zerstört wird.

4. Verfahren nach Anspruch 3, wobei der Datenträger (7) einen magnetisch beschreibbaren Faden (7a) enthält.

5. Verfahren nach Anspruch 4, wobei
- die Filtereinheit (4) ein Filtermaterial (6) enthält und der beschreibbare Faden (7a) in das Filtermaterial (6) eingebettet ist, oder
- die Filtereinheit (4) ein Mundstück (5) aufweist, welches den beschreibbaren Faden (7a) enthält.

6. Verfahren nach Anspruch 3, wobei der Datenträger (7) einen RFID-Transponder beinhaltet.

7. Verfahren nach einem der Ansprüche 3 oder 6, wobei die Filtereinheit (4) eine Kapsel (7b) enthält, welche den Datenträger (7) aufweist.

8. Verfahren nach Anspruch 3, wobei
- die Filtereinheit (4) ein Mundstück (5) aufweist; und
- der Datenträger (7) ein magnetisierbares Farbmittel (7c) enthält, das an dem Mundstück (5) angebracht ist.

## Claims

1. A device for disposal of a used filter unit (4) of a smokeable tobacco product (1), the device (8) comprising
- an area (9) for receiving the filter unit (4),
- a reader (11), which is configured to automatically readout an identifier of the filter unit (4) from a data carrier (7) of the filter unit (4) when the filter unit (4) is located in the area (9);
- a communication unit (12, 13), which is configured
- to compare the readout identifier to a reference code, which is stored on a database (15);
- to generate at least one electrical signal depending on a result of the comparison; **characterized by**
- a filter processing unit (16), which is configured to destroy the filter unit (4) depending on the result of the comparison.

2. The device according to claim 1, wherein the communication unit (12, 13) is configured to modify the reference code depending on the at least one electrical signal if the reference code corresponds to the readout identifier.

3. A method for disposal of a used filter unit (4) of a smokeable tobacco product (1), wherein
- the filter unit (4) comprises a data carrier (7), wherein an identifier of the filter unit (4) is stored on the data carrier (7);
- the identifier of the filter unit (4) is readout by machine;
- the readout identifier is compared to a reference code, which is stored on a database (15), by means of a communication unit (12, 13);
- at least one electrical signal is generated depending on a result of the comparison; and
- the filter unit (4) is destroyed depending on the result of the comparison.

4. The method according to claim 3, wherein the data carrier (7) contains a magnetically writable thread (7a).

5. The method according to claim 4, wherein
- the filter unit (4) contains a filter material (6) and the writable thread (7a) is embedded in the filter material (6), or
- the filter unit (4) comprises a mouthpiece (5), which contains the writable thread (7a).

6. The method according to claim 3, wherein the data carrier (7) includes an RFID transponder.

7. The method according to any one of claims 3 or 6, wherein the filter unit (4) contains a capsule (7b), which comprises the data carrier (7).

8. The method according to claim 3, wherein
- the filter unit (4) comprises a mouthpiece (5); and
- the data carrier (7) contains a magnetizable colorant (7c), which is attached to the mouthpiece (5).

## Revendications

1. Dispositif pour éliminer une unité de filtre (4) usagée d'un produit de tabac fumable (1), le dispositif (8) comportant :
- une zone (9) pour recevoir l'unité de filtre (4) ;
- un lecteur (11) conçu pour lire automatiquement un identifiant de l'unité de filtre (4) sur un support de données (7) de l'unité de filtre (4), lorsque l'unité de filtre (4) se situe dans la zone (9) ;
- une unité de communication (12, 13) conçue pour :
- comparer l'identifiant lu avec un code de référence qui est stocké dans une base de données (15) ;
- générer au moins un signal électrique en fonction d'un résultat de la comparaison ; **caractérisé par**
- une unité de traitement de filtre (16) conçue pour détruire l'unité de filtre (4) en fonction du résultat de la comparaison.

2. Dispositif selon la revendication 1, dans lequel l'unité de communication (12, 13) est conçue pour modifier le code de référence en fonction du au moins un signal électrique, lorsque le code de référence correspond à l'identifiant lu.

3. Procédé pour éliminer une unité de filtre (4) usagée d'un produit de tabac fumable (1), dans lequel
- l'unité de filtre (4) comporte un support de données (7), un identifiant de l'unité de filtre (4) étant stocké dans le support de données (7) ;
- l'identifiant de l'unité de filtre (4) est lu par machine ;
- l'identifiant lu est comparé, au moyen d'une unité de communication (12, 13), avec un code de référence qui est stocké dans une base de données (15) ;
- au moins un signal électrique est généré en fonction d'un résultat de la comparaison ; et
- l'unité de filtre (4) est détruite en fonction du résultat de la comparaison.

4. Procédé selon la revendication 3, dans lequel le support de données (7) contient un fil inscriptible magnétiquement (7a).

5. Procédé selon la revendication 4, dans lequel
- l'unité de filtre (4) contient un matériau filtrant (6) et le fil inscriptible (7a) est inséré dans le matériau filtrant (6), ou
- l'unité de filtre (4) comporte un embout (5) qui contient le fil inscriptible (7a).

6. Procédé selon la revendication 3, dans lequel le support de données (7) comprend un transpondeur RFID.

7. Procédé selon l'une des revendications 3 ou 6, dans lequel l'unité de filtre (4) contient une capsule (7b) qui comporte le support de données (7).

8. Procédé selon la revendication 3, dans lequel
- l'unité de filtre (4) comporte un embout (5) ; et
- le support de données (7) contient un colorant magnétisable (7c) qui est appliqué sur l'embout (5).
